# EUROPEAN PATENT SPECIFICATION

(11) **EP 2 253 981 B1**
(45) Date of publication and mention of the grant of the patent: **30.11.2011**
(21) Application number: 09006924.6
(22) Date of filing: 23.05.2009
(51) Int. Cl.: G02B 6/44, H04B 10/12

(54) **Connector housing of a radio-over-fiber optical fiber cable system**
Steckverbindergehäuse für ein Funk-über-Faser-Glasfaserkabelsystem
Boîtier de connecteur d'un système de câble de fibre optique de type transmission radio sur fibre

(43) Date of publication of application: 24.11.2010
(73) Proprietor: CCS Technology Inc., Wilmington, DE 19803 (US)
(72) Inventor: Ciechomski, Tomasz, 99-400 Lowicz (PL); Tenderenda, Tadeusz, 02-796 Warszawa (PL)
(74) Representative: Sturm, Christoph

(56) References cited:
- WO-A1-2009/014710
- WO-A2-2008/033298
- WO-A2-2009/045689
- US-A- 6 167 183
- US-A1- 2006 210 229
- US-A1- 2008 013 909

## Description

The application relates to a connector housing of a radio-over-fiber optical fiber cable system.

WO 2008/033298 A2 and WO 2009/048506 A1 each disclose a radio-over-fiber optical fiber cable system comprising a head end unit, remote antennas called transponder units and a communication link connecting the head end unit and the remote antennas. The head end unit comprises electrical-to-optical converters for converting radio signals into optical signals. The remote antennas comprise optical-to-electrical converters for converting optical signals into radio signals. The communication link comprises optical fibers for transmitting optical signals and copper wires for transmitting an electrical power supply.

Other prior art is known from US 6 167 183 A, from WO 2009/045689 A2, from US 2008/013909 A1 and from US 2006/210229 A1.

Against this background, the present application is based on the object of providing a novel connector housing of a radio-over-fiber optical fiber cable system allowing an easy installation of a radio-over-fiber optical fiber cable system. The connector housing is defined in claim 1.

Preferred developments are given in the dependent claims and the description below. Exemplary embodiments will be explained in more detail with reference to the drawing, in which:
- figure 1: shows a radio-over-fiber optical fiber cable system installed in a building having several floors;
- figures 2 to 8: show details of a connector housing of the radio-over-fiber opti- cal fiber cable system shown in figure 1;
- figure 9: shows a hybrid distribution cable of the radio-over-fiber optical fiber cable system shown in figure 1; and
- figure 10: shows a hybrid tether cable of the radio-over-fiber optical fiber cable system shown in figure 1.

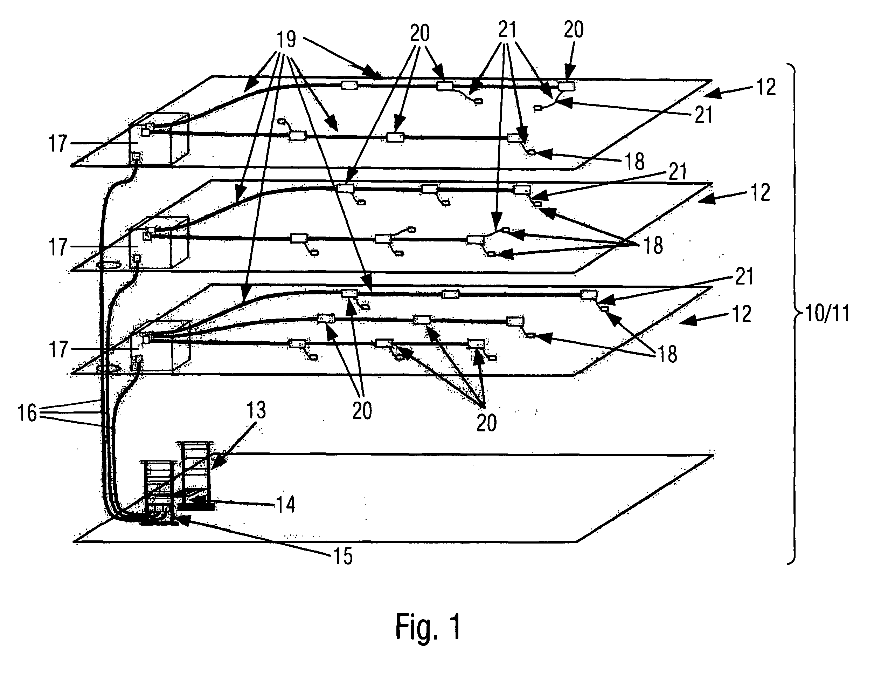

Figure 1 shows a schematic view of radio-over-fiber optical fiber cable system 10 installed in a building 11 having several floors 12.

The radio-over-fiber optical fiber cable system 10 comprises a base station unit 13 being designed for receiving radio signals wireless from a not shown radio resource. The radio-over-fiber optical fiber cable system 10 further comprises a head end unit 14 being designed for converting said radio signals into optical signals. A cross connect unit 15 is assigned to said head end unit 14 providing a connectivity function for optical fibers of fiber optic riser cables 16 running mainly in vertical direction between the head end unit 14, namely the cross connect unit 15 assigned to said head end unit 14, and interconnect units 17 assigned to the floors 12 of said building 11. To each floor 12 there is assigned at least one interconnect unit 17.

The riser cables 16 running mainly in vertical direction comprise only optical fibers and transmit only optical signals, namely optical signals provided by the head end unit 14 by converting radio signals into optical signals. According to the shown embodiment, to each floor 12 there is running an individual riser cable 16. It is also possible that a single riser cable is running to all floors of the building by breaking out a subset of optical fibers of the single riser cable in the region of each floor.

Each interconnect unit 17 comprising a power supply unit for providing electrical power supply to remote antenna units 18 assigned to the respective floor 12. The remote antennas 18 are designed for converting optical signals into radio signals.

The radio-over-fiber optical fiber cable system 10 further comprises several distribution cables 19 running mainly in horizontal direction within the floors 12 of said building 11. There are distribution cables 19 running between the interconnect unit 17 of the respective floor 12 and a connector housing 20 assigned to the respective floor 12. In addition, there are distribution cables 19 running between two connector housings 20 assigned to respective floor 12. Said distribution cables 19 are designed as hybrid distribution cables 19 comprising optical fibers for transmitting optical signals and copper wires for transmitting electrical power supply.

In addition to the hybrid distribution cables 19 the radio-over-fiber optical fiber cable system 10 further comprises tether cables 21 running mainly in horizontal direction within the floors 12 of the building 11 between a connector housing 20 assigned to said floor 12 and a remote antenna unit 18 assigned to said floor. Said tether cables 21 are designed as hybrid tether cables 21 comprising optical fibers for transmitting optical signals and copper wires for transmitting electrical power supply.

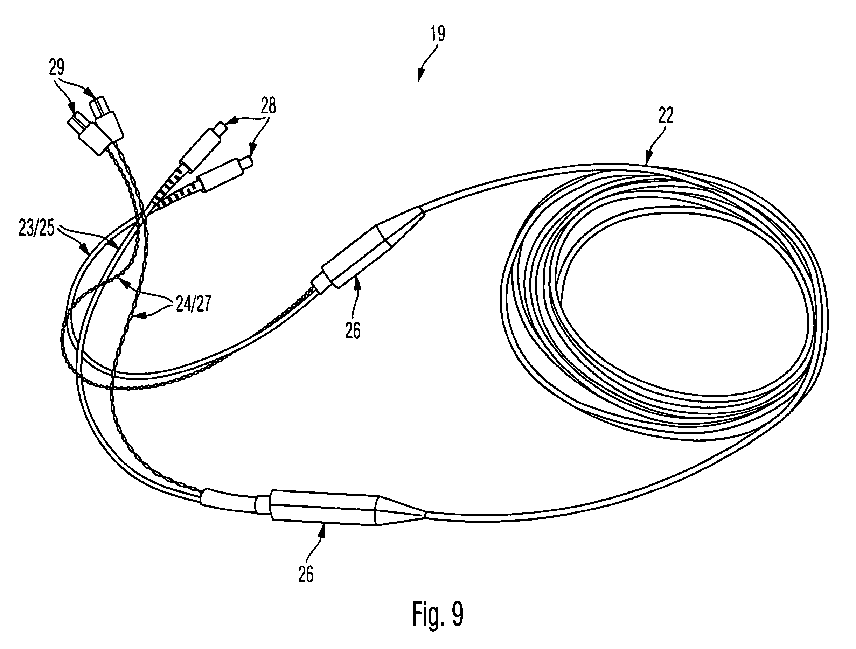

Figure 9 shows a detailed view of one of said hybrid distribution cables 19 being a component of the radio-over-fiber optical fiber cable system 10. Such a hybrid distribution cable 19 running between an interconnect unit 17 and a connector housing 20 or between two connector housings 20 of the radio-over-fiber optical fiber cable system 10 comprises a cable jacket 22 and strength members, more than two optical fibers 23 for transmitting optical signals, namely radio signals being converted into optical signals, and two copper wires 24 for transmitting an electrical power supply.

All optical fibers 23 of the hybrid distribution cable 19 are surrounded by a common or shared protective tube 25, said protective tube 25 being surrounded by said cable jacket 22. The protective tube 25 surrounding the optical fibers 23 is broken out from the cable jacket 22 of the hybrid distribution cable 19 at both ends of the cable 19 by furcation plugs 26.

The copper wires 24 of the hybrid distribution cable 19 form preferably a twisted pair 27 of copper wires 24 and are surrounded by said cable jacket 22. The copper wires 24 are broken out at both ends of the cable 19 by said furcation plugs 26. The furcation plugs 26 receive the strength members acting as strain relief elements of the hybrid distribution cable 19. The strength members are preferably separate from the cable jacket 22 positioned under the cable jacket.

The hybrid distribution cable 19 comprises multi fiber connectors 28, wherein to each end of the hybrid distribution cable 19 there is assigned one multi fiber connector 28, and wherein all optical fibers 23 of the hybrid distribution cable 19 are connected with the respective ends to the respective multi fiber connectors 28.

The hybrid distribution cable 19 comprises further copper connectors 29, wherein to each end of the hybrid distribution cable 19 there is assigned one copper connector 29, and wherein all copper wires 24 of the hybrid distribution cable 19 are connected with the respective ends to the respective copper connector 29. The hybrid distribution cable 19 is preconnectorized with said multi fiber connectors 28 and said copper connectors 29.

According to an embodiment of the hybrid distribution cable, the same comprises two 20AWG copper wires forming a twisted pair and twelve 250 µm optic fibers. The hybrid distribution cable is furcated with octal furcation plugs into a twelve fiber inner tube and the copper twisted pair. The strength members are crimped onto the octal furcation plug crimp body, hence the furcation plugs can work as a strain relief element. The optical fibers are terminated with an angled twelve fiber MTP connector on both sides of the hybrid distribution cable. The copper wires are terminated on both ends with Mini-Universal Mate-N-Lok connectors, which consist of two contact sockets, and which after being crimped on two copper wires are inserted and locked into a housing.

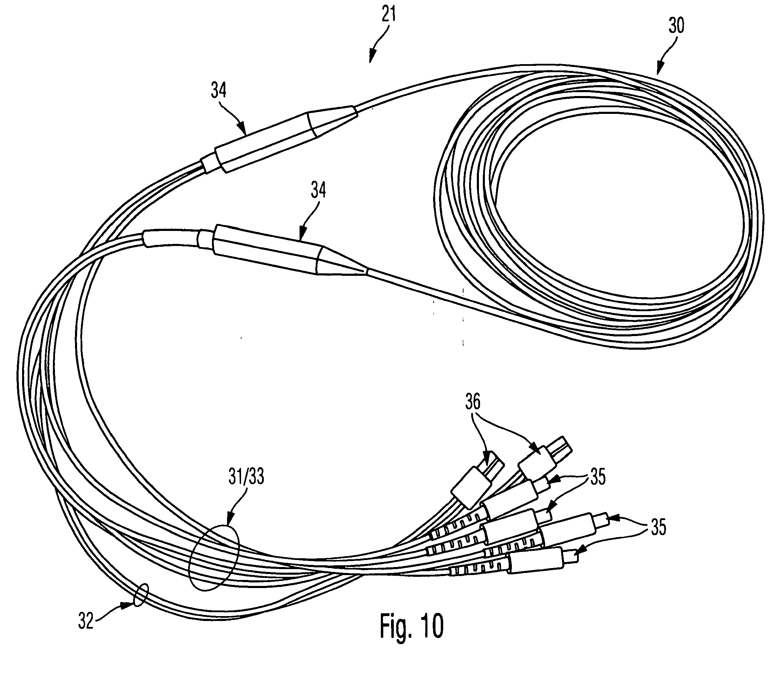

Figure 10 shows a detailed view of one of said hybrid tether cable 21 being a component of the radio-over-fiber optical fiber cable system 10. Such a hybrid tether cable 21 running between a connector housing 20 and a remote antenna 18 of the radio-over-fiber optical fiber cable system 10 comprises a cable jacket 30 and strength members, two optical fibers 31 for transmitting optical signals, namely radio signals being converted into optical signals, and two copper wires 32 for transmitting an electrical power supply.

Each optical fiber 31 of the hybrid tether cable 21 is surrounded by an individual protective tube 33, said protective tubes 33 being surrounded by said cable jacket 30. The protective tubes 33 surrounding the optical fibers 31 are broken out from the cable jacket 30 of the hybrid tether cable 21 at both ends of the cable 21 by furcation plugs 34. The copper wires 31 of the hybrid tether cable 21 are also surrounded by said cable jacket 30. The copper wires 31 are broken out at both ends of the tether cable 21 by said furcation plugs 34. The furcation plugs 34 receive the strength members acting as strain relief elements of the hybrid tether cable 21.

The hybrid tether cable 21 comprises single fiber connectors 35, wherein to each end of the hybrid tether cable 21 there are assigned two single fiber connector 35, and wherein all optical fibers 31 of the hybrid tether cable 21 are connected with the respective ends to the respective single fiber connectors 35. The hybrid tether cable 21 comprises further copper connectors 36, wherein to each end of the hybrid tether cable 21 there is assigned one copper connector 36, and wherein all copper wires 32 of the hybrid tether cable 21 are connected with the respective ends to the respective copper connector 36.

According to an embodiment of the hybrid tether cable 21, the same comprises two 28AWG copper power supply and two 900µm buffered optic fibers. The tether cable is furcated with octal furcation plugs into four 2.0 fanouts. The cable strength members are crimped onto the octal furcation plug crimp body, hence the furcation plug can work as a strain relief element.

The optical fibers of the tether cable according to the embodiment are terminated with two SCAPC connectors on both sides of the cable assembly. The copper wires the tether cable are terminated on both ends with Mini-Universal Mate-N-Lok connector, which consists of two contact sockets, which after being crimped on two copper wires are inserted and locked into a housing.

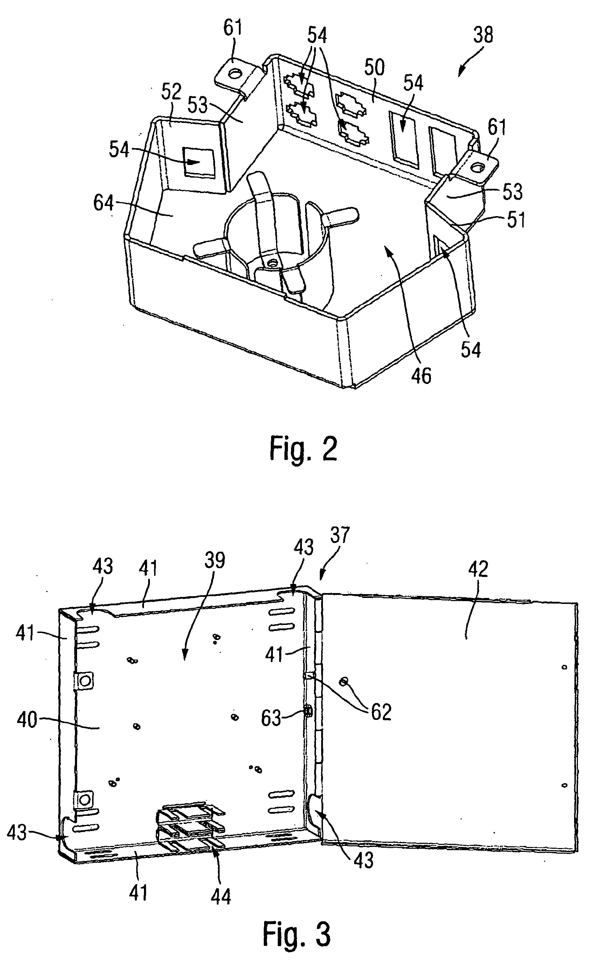

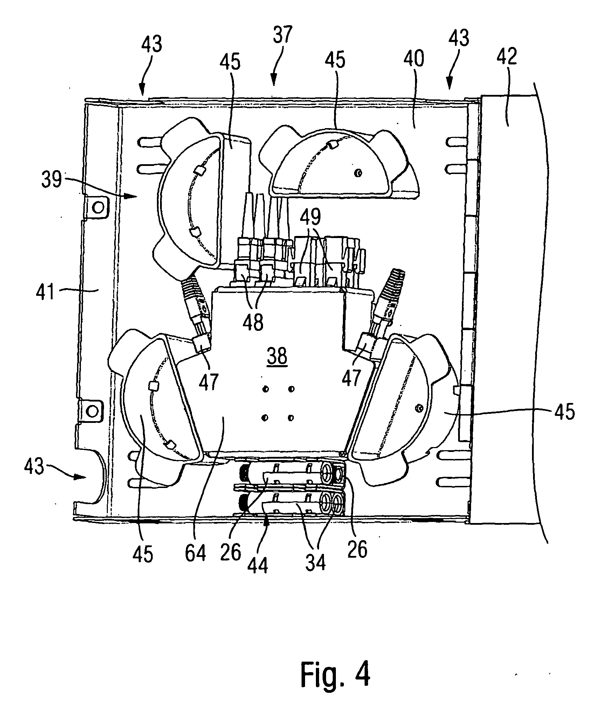

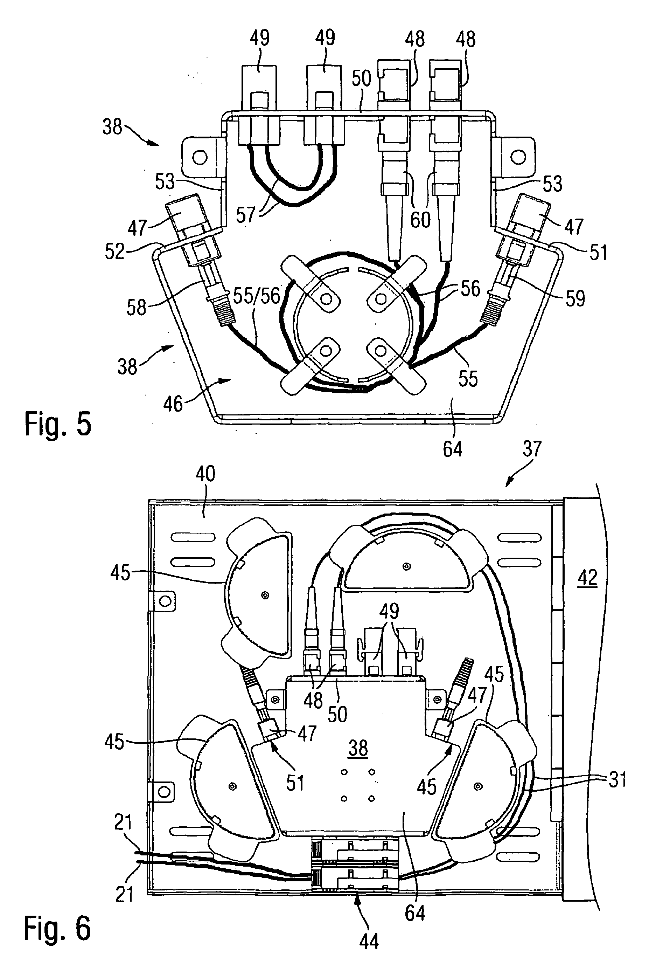

Figures 2 to 8 show details of a connector housing 20 being a component of the radio-over-fiber optical fiber cable system 10. The connector housing 20 comprises an outer housing 37 (see figure 3) and an inner housing 38 (see figures 2, 5) being positioned within said outer housing 37 (see figures 4, 6, 7, 8).

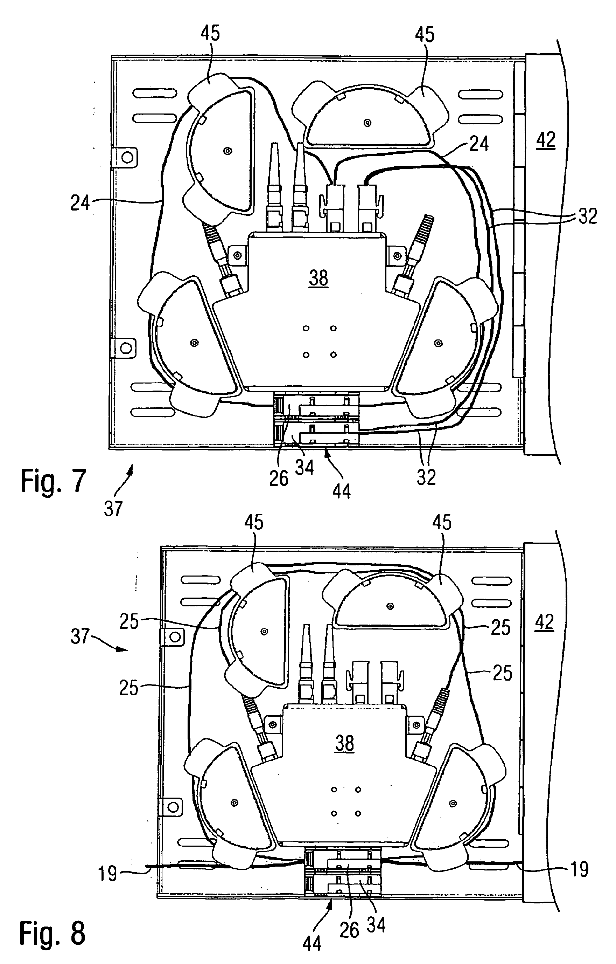

Said outer housing 37 of said connector housing 20 comprises walls defining an interior 39 of said outer housing 37, namely a bottom wall 40, side walls 41 and a top wall 42 being pivotably attached to one of said side wall 41. Said inner housing 38 is positioned within said interior 39 of said outer housing 37. The side walls 41 of said outer housing 37 comprise openings 43 for carrying-in/carrying-out hybrid distribution cables 19 (see figure 8) and hybrid tether cables 21 (see figure 6) into/from said interior 39 of said outer housing 37.

Said outer housing 37 comprises strain relief elements 44 being positioned in the interior 39 of said outer housing 37, said strain relief elements 44 being designed to receive the furcation adapters 26, 34 assigned to said hybrid distribution cables 19 and said hybrid tether cables 21.

Said outer housing 37 comprises further bend radius protectors 45 being positioned in the interior 39 of said outer housing 37, said bend radius protectors 45 being designed to guide said the optical fibers 25 of said hybrid distribution cables 19 (see figure 8) and the optical fibers 31 of said hybrid tether cables 21 (see figure 6) inside the interior 39 of said outer housing 37. Figure 7 shows the copper wires 24, 32 of the hybrid distribution cables 19 and the hybrid tether cables 21 running in the outer housing 37.

Said inner housing 38 of said connector housing 20 comprises walls defining an interior 46 of said inner housing 38. Several adapters are assigned to side walls of said inner housing 38, namely two multi fiber adapters 47 for receiving the multi fiber connectors 28 being assigned to an incoming and outgoing hybrid distribution cable 19, two duplex fiber adapters 48 for receiving the single fiber connectors 35 being assigned to outgoing hybrid tether cables 21, and four copper adapters 49 for receiving the copper connectors 29, 36 being assigned to said hybrid distribution cables 19 and said hybrid tether cables 21.

The duplex fiber adapters 48 and the copper adapters 49 are assigned to a first side wall 50 of said inner housing 38. The multi fiber adapter 47 for the incoming hybrid distribution cable 19 is assigned to a second side wall 51 of said inner housing 38. The multi fiber adapter 47 for the outgoing hybrid distribution cable 19 is assigned to a third side wall 52 of said inner housing 38.

Said three side walls 50, 51 and 52 are arranged in such a way to each other that the adapters 47, 48 and 49 assigned to said side walls 50, 51 and 52 are all aligned or guided to the same wall, namely the same side wall 41, of the outer housing 37. Said three side walls 50, 51 and 52 are arranged in such a way to each other that the first side wall 50 of the inner housing 38 has a smaller distance to said side wall 41 of the outer housing 37 than the second side wall 51 of the inner housing 38 and the third side wall 52 of the inner housing 38. The second side wall 51 and the third side wall 52 have approximately the same distance to said side wall 41 of the outer housing 37.

Further on, the second side wall 51 and the third side wall 52 are both connected or joined with said first side wall 50 by side walls 53 running both approximately perpendicular to said first side wall 50, whereby said three side walls 50, 51 and 52 are arranged in such a way to each other that the second side wall 51 being positioned at a first side of said first side wall 50 and the third side wall 52 being positioned at a second side of said first side wall 50 define each an obtuse angle with said first side wall 50.

The second side wall 51 being positioned at the first side of said first side wall 50 and the third side wall 52 being positioned at the second side of said first side wall 50 define each an obtuse angle with the respective side wall 53 running between the said first side wall 50 and the second side wall 51 or running between the said first side wall 50 and the third side wall 52.

Figure 2 shows openings 54 of the walls 50, 51, and 52 of said inner housing 38 for receiving said adapters 47, 48 and 49.

According to figure 5, inside the interior 46 of said inner housing 48 there are running optical fibers and copper wires, namely first optical fibers 55 for connecting the multi fiber adapters 47 with each other, second optical fibers 56 for connecting the multi fiber adapter 47 for receiving an multi fiber connector being assigned to an incoming hybrid distribution cable 19 to the douplex fiber adapters 48, and copper wires 57 for connecting the copper adapters 49. The copper cross connect provided by said copper wires 57 consists of four copper wire pairs providing the power supply from the incoming distribution cable 19 to other three output ports, namely for the outgoing distribution cable 19 and for the outgoing tether cables 21.

The connector housing 20 provides an enclosure and a cross connect for the hybrid cable assemblies 19, 21 running mainly in horizontal direction, namely for the optical fibers of the hybrid distribution cable 21 and hybrid tether cable 21 and for power supply copper wires of the hybrid distribution cable 21 and hybrid tether cable 21. The connector housing 20 consists of two major pieces, namely the inner housing 38 where an optic fiber harness, optical connector adapters and copper connections are situated, and the outer housing 37, which hosts the inner housing 37 and protects the furcation adapters 36, 34 and fan-out legs of the hybrid distribution cables 19 and hybrid tether cables 21.

The compact shape of the inner housing 38 allows effective use of space to accommodate the two MTP adapters 47, two duplex SC adapters 48 and four duplex copper adapters 49. Secondly the inner housing 38 secures position and bending radius of the optical fibers 55, 56. After mounting all optical fibers 55, 56 and copper wires 57 inside the inner housing 38, the same is mounted inside the outer housing 37.

The optical fibers 55, 56 providing said optic fiber harness are preferably provided by a single mode twelve fiber bare ribbon, connectorized with a multi fiber connector 58, especially a MTPA connector, on one side and furcated into an eight fiber ribbon and four 900 µm tight buffer fibers. The eight fiber ribbon is connectorized with a multi fiber connector 59, especially a MTPA connector, while the tight buffers are connectorized with single fiber connector 60, especially SCAPC connectors.

Said connectors 58, 59 and 60 positioned in the interior 46 of the inner housing 38 can be connected from the inside of said inner housing 38 to the adapters 47, 48 and 49 receiving the connectors 28, 29, 35, 36 of the hybrid cables 19, 21 from the exterior of said inner housing 38.

After mounting the inner housing 38 inside the outer housing 37 two hybrid tether cables 21 and two hybrid distribution cables 19 can be connected and secured in the outer housing 37. During the product field installation the terminated ends of the distribution cables 19 and tether cables 21 are mounted inside of the outer housing 37 with strain relief elements which in this case are the octal furcation adapters 26, 34.

The connector housing 20 has four openings 43 on different walls 41 which allow easy routing of the exiting/entering tether cables 21 and distribution cables 19 in different directions. The connector housing 20 is equipped with the strain relief element 44 which can hold up to four octal furcation adapters 26, 34. Additionally the connector housing 20 provides full protection for cable furcation legs as well as all connectors and adapters. The connector housing 20 is equipped in variable mounting options allowing installation in different environments, e.g. on cable trays, walls, ceilings.

The modular two housing design of the connector housing 20 allows modifying the outer housing 37 without introducing any changes in the design of the inner housing 38.

The connector housing 20 is fully electrically grounded, with the inner housing 38 / outer housing 37 contact in mounting elements 61, top wall 42 / outer housing 37 contact in copper pins 62 connected with a copper conductor and an outer housing 37 output copper port 63 for external grounding wire.

Instead of using the furcation-adapters 26, 34 to break out the optical fibers and copper wires out of the hybrid distribution cable 19 and the hybrid tether cable 21, the hybrid distribution cable and the hybrid tether cable can be directly terminated with a hybrid copper-fiber connector equipped with strain relief elements.

The inner housing 38 comprises further a top wall 64, wherein the bottom wall 40 of said outer housing 37 serves as bottom wall for said inner housing 38 when the inner housing 38 is positioned or mounted in the interior 39 of said outer housing 37.

### List of reference numerals

- 10: radio-over-fiber optical fiber cable system
- 11: building
- 12: floor
- 13: base station unit
- 14: head end unit
- 15: cross connect unit
- 16: riser cable
- 17: interconnect unit
- 18: remote antenna
- 19: hybrid distribution cable
- 20: connector housing
- 21: hybrid tether cable
- 22: cable jacket
- 23: optical fiber
- 24: copper wire
- 25: protective tube
- 26: furcation adapter
- 27: twisted pair
- 28: multi fiber connector
- 29: copper connector
- 30: cable jacket
- 31: optical fiber
- 32: copper wire
- 33: protective tube
- 34: furcation adapter
- 35: single fiber connector
- 36: copper connector
- 37: outer housing
- 38: inner housing
- 39: interior
- 40: bottom wall
- 41: side wall
- 42: top wall
- 43: opening
- 44: strain relief element
- 45: bend radius protector
- 46: interior
- 47: multi fiber adapter
- 48: duplex fiber adapter
- 49: copper adapter
- 50: side wall
- 51: side wall
- 52: side wall
- 53: side wall
- 54: opening
- 55: optical fiber
- 56: optical fiber
- 57: copper wire
- 58: multi fiber connector
- 59: multi fiber connector
- 60: single fiber connector
- 61: mounting element
- 62: copper pin
- 63: output copper port
- 64: top wall

## Claims

1. Connector housing (20) of a radio-over-fiber optical fiber cable system (10), said connector module (20) comprising:
an outer housing (37) and an inner housing (38) being positioned within said outer housing (37);
said outer housing (37) comprising walls defining an interior (39) of said outer housing (37),
wherein said inner housing (38) is positioned within said interior (39) of said outer housing (37),
wherein walls (41) of said outer housing (27) comprise openings (43) for carrying-in/carrying-out hybrid distribution cables and hybrid tether cables of the radio-over-fiber optical fiber cable system (10) into/from said interior (39) of said outer housing (37);
said inner housing (38) comprising walls defining an interior (46) of said inner housing (38),
wherein several adapters are assigned to side walls of said inner housing (38), namely two multi fiber adapters (47) for receiving multi fiber connectors being assigned to an incoming and outgoing hybrid distribution cable, two duplex fiber adapters (48) for receiving fiber connectors being assigned to outgoing hybrid tether cables, and four copper adapters (49) for receiving copper connectors being assigned to said hybrid distribution cables and said hybrid tether cables; and
wherein inside the interior (46) of said inner housing (38) there are running optical fibers (55, 56) and copper wires (57), namely first optical fibers (55) for connecting the multi fiber adapters (47) with each other, second optical fibers (56) for connecting the multi fiber adapter (47) for receiving a multi fiber connector being assigned to an incoming hybrid distribution cable to the duplex fiber adapters (48), and copper wires (57) for connecting copper adapters (49);
**characterized in that**
the duplex fiber adapters (48) and the copper adapters (49) are assigned to a first side wall (50) of said inner housing (38), wherein the multi fiber adapter (47) for the incoming hybrid distribution cable is assigned to a second side wall (51) of said inner housing (38), wherein the multi fiber adapter (47) for the outgoing hybrid distribution cable is assigned to a third side wall (52) of said inner housing (38);
said three side walls (50, 51, 52) are arranged, namely angled, in such a way to each other so that the adapters (47, 48, 49) assigned to said side walls (50, 51, 52) are all oriented towards the same side wall (41) of the outer housing (37).

2. Connector housing as claimed in claim 1, wherein said outer housing (37) comprises strain relief elements (44) being positioned in the interior (39) of said outer housing (37), said strain relief elements (44) being designed to receive furcation adapters assigned to said hybrid distribution cables and said hybrid tether cables.

3. Connector housing as claimed in claim 1 or 2, wherein said outer housing (37) comprises bend radius protectors (45) being positioned in the interior (39) of said outer housing (37), said bend radius protectors (45) being designed to guide said the optical fibers of said hybrid distribution cables and said hybrid tether cables inside the interior (39) of said outer housing (37).

4. Connector housing as claimed in one of claims 1 to 3, wherein said three side walls are arranged in such a way that the first side wall (50) of the inner housing has a smaller distance to said side wall (41) of the outer housing than the second side wall (51) and the third side wall (52) of the inner housing.

5. Connector housing as claimed in one of claims 1 to 4, wherein said three side walls are arranged in such a way that the second side wall (51) being positioned at a first side and the third side wall (52) being positioned at a second side of said first side wall (50) define each an obtuse angle with said first side wall (50).

6. Connector housing as claimed in one of claims 1 to 5, wherein said inner housing (38) comprises a top wall (64), and wherein the bottom wall (40) of said outer housing (37) serves as bottom wall for said inner housing (38) when the inner housing (38) is mounted in the interior (39) of said outer housing (37).

## Patentansprüche

1. Verbindergehäuse (20) eines Radio-over-Fibre-Lichtwellenleitersystems (10), wobei das Verbindermodul (20) Folgendes umfasst:
ein äußeres Gehäuse (37) und ein in dem äußeren Gehäuse (37) positioniertes inneres Gehäuse (38);
wobei das äußere Gehäuse (37) Wände umfasst, die einen Innenraum (39) des äußeren Gehäuses (37) definieren,
wobei das innere Gehäuse (38) in dem Innenraum (39) des äußeren Gehäuses (37) positioniert ist,
wobei Wände (41) des äußeren Gehäuses (37) Öffnungen (43) zum Einführen/Abführen von Hybridverteilungskabeln und Hybridanbindungskabeln des Radio-over-Fibre-Lichtwellenleitersystems (10) in den/aus dem Innenraum (39) des äußeren Gehäuses (37) umfassen;
wobei das innere Gehäuse (38) Wände umfasst, die einen Innenraum (46) des inneren Gehäuses (38) definieren,
wobei mehrere Adapter Seitenwänden des inneren Gehäuses (38) zugeordnet sind, wobei nämlich zwei Mehrfaseradapter (47) zur Aufnahme von Mehrfaserverbindern einem ankommenden und abgehenden Hybridverteilungskabel zugeordnet sind, zwei Duplexfaseradapter (48) zur Aufnahme von Faserverbindern abgehenden
Hybridanbindungskabeln zugeordnet sind und vier Kupferadapter (49) zur Aufnahme von Kupferverbindern den Hybridverteilungskabeln und den Hybridanbindungskabeln zugeordnet sind; und
wobei sich innerhalb des Innenraums (46) des inneren Gehäuses (38) Lichtwellenleiter (55, 56) und Kupferdrähte (57) erstrecken, nämlich erste Lichtwellenleiter (55) zum Miteinanderverbinden der Mehrfaseradapter (47), zweite Lichtwellenleiter (56) zum Verbinden des Mehrfaseradapters (47) zur Aufnahme eines Mehrfaserverbinders, der einem ankommenden Hybridverteilungskabel zugeordnet ist, mit den Duplexfaseradaptern (48) und Kupferdrähte (57) zum Verbinden von Kupferadaptern (49);
**dadurch gekennzeichnet, dass**
die Duplexfaseradapter (48) und die Kupferadapter (49) einer ersten Seitenwand (50) des inneren Gehäuses (38) zugeordnet sind, wobei der Mehrfaseradapter (47) für das ankommende Hybridverteilungskabel einer zweiten Seitenwand (51) des inneren Gehäuses (38) zugeordnet ist, wobei der Mehrfaseradapter (47) für das abgehende Hybridverteilungskabel einer dritten Seitenwand (52) des inneren Gehäuses (38) zugeordnet ist;
wobei drei Seitenwände (50, 51, 52) so bezüglich einander angeordnet, nämlich abgewinkelt, sind, dass die den Seitenwänden (50, 51, 52) zugeordneten Adapter (47, 48, 49) sämtlichst zu der gleichen Seitenwand (41) des äußeren Gehäuses (37) ausgerichtet sind.

2. Verbindergehäuse nach Anspruch 1, wobei das äußere Gehäuse (37) Zugentlastungselemente (44) umfasst, die im Innenraum (39) des äußeren Gehäuses (37) positioniert sind, wobei die Zugentlastungselemente (44) dazu ausgeführt sind, den Hybridverteilungskabeln und den Hybridanbindungskabeln zugeordnete Aufteiladapter aufzunehmen.

3. Verbindergehäuse nach Anspruch 1 oder 2, wobei das äußere Gehäuse (37) Biegeradiusschutzelemente (45) umfasst, die in dem Innenraum (39) des äußeren Gehäuse (37) positioniert sind, wobei die Biegeradiusschutzelemente (45) dazu ausgeführt sind, die Lichtwellenleiter der Hybridverteilungskabel und der Hybridanbindungskabel innerhalb des Innenraums (39) des äußeren Gehäuses (37) zu führen.

4. Verbindergehäuse nach einem der Ansprüche 1 bis 3, wobei die drei Seitenwände so angeordnet sind, dass die erste Seitenwand (50) des inneren Gehäuses einen geringeren Abstand zu der Seitenwand (41) des äußeren Gehäuses hat als die zweite Seitenwand (51) und die dritte Seitenwand (52) des inneren Gehäuses.

5. Verbindergehäuse nach einem der Ansprüche 1 bis 4, wobei die drei Seitenwände so angeordnet sind, dass die zweite Seitenwand (51), die auf einer ersten Seite, und die dritte Seitenwand (52), die auf einer zweiten Seite der ersten Seitenwand (50) angeordnet ist, jeweils einen stumpfen Winkel mit der ersten Seitenwand (50) bilden.

6. Verbindergehäuse nach einem der Ansprüche 1 bis 5, wobei das innere Gehäuse (38) eine Oberwand (64) umfasst und wobei die Unterwand (40) des äußeren Gehäuses (37) als Unterwand für das innere Gehäuse (38) dient, wenn das innere Gehäuse (38) im Innenraum (39) des äußeren Gehäuses (37) angebracht ist.

## Revendications

1. Boîtier (20) de connecteur d'un système (10) de câble à fibre optique pour radio sur fibre, ledit module (20) de connecteur comportant :
un boîtier extérieur (37) et un boîtier intérieur (38) positionné dans ledit boîtier extérieur (37) ;
ledit boîtier extérieur (37) comportant des parois définissant un intérieur (39) dudit boîtier extérieur (37),
ledit boîtier intérieur (38) étant positionné dans ledit intérieur (39) dudit boîtier extérieur (37),
des parois (41) dudit boîtier extérieur (27) comportant des ouvertures (43) destinées à guider l'entrée et la sortie de câbles hybrides de distribution et de câbles hybrides d'amarrage du système (10) de câble à fibre optique pour radio sur fibre vers / depuis ledit intérieur (39) dudit boîtier extérieur (37) ;
ledit boîtier intérieur (38) comportant des parois définissant un intérieur (46) dudit boîtier intérieur (38),
plusieurs adaptateurs étant affectés à des parois latérales dudit boîtier intérieur (38), à savoir deux adaptateurs multifibres (47) servant à recevoir des connecteurs multifibres affectés à un câble hybride de distribution entrant et sortant, deux adaptateurs (48) à fibres duplex servant à recevoir des connecteurs à fibres affectés à des câbles hybrides d'amarrage sortants et quatre adaptateurs (49) pour cuivre servant à recevoir des connecteurs en cuivre affectés auxdits câbles hybrides de distribution et auxdits câbles hybrides d'amarrage ; et
l'intérieur (46) dudit boîtier intérieur (38) étant parcouru par des fibres optiques (55, 56) et des fils (57) de cuivre, à savoir des premières fibres optiques (55) servant à relier entre eux les adaptateurs multifibres (47), des deuxièmes fibres optiques (56) servant à relier l'adaptateur multifibres (47) servant à recevoir un connecteur multifibres affecté à un câble hybride de distribution entrant aux adaptateurs (48) à fibres duplex, et des fils (57) de cuivre servant à brancher des adaptateurs (49) pour cuivre ;
**caractérisé en ce que**
les adaptateurs (48) à fibres duplex et les adaptateurs (49) pour cuivre sont affectés à une première paroi latérale (50) dudit boîtier intérieur (38),
l'adaptateur multifibres (47) destiné au câble hybride de distribution entrant étant affecté à une deuxième paroi latérale (51) dudit boîtier intérieur (38),
l'adaptateur multifibres (47) destiné au câble hybride de distribution sortant étant affecté à une troisième paroi latérale (52) dudit boîtier intérieur (38) ;
lesdites trois parois latérales (50, 51, 52) étant disposées, c'est-à-dire inclinées, les unes par rapport aux autres de telle façon que les adaptateurs (47, 48, 49) affectés auxdites parois latérales (50, 51, 52) soient tous orientés vers la même paroi latérale (41) du boîtier extérieur (37).

2. Boîtier de connecteur selon la revendication 1, ledit boîtier extérieur (37) comportant des éléments (44) de relaxation de contraintes positionnés dans l'intérieur (39) dudit boîtier extérieur (37), lesdits éléments (44) de relaxation de contraintes étant conçus pour recevoir des adaptateurs de bifurcation affectés auxdits câbles hybrides de distribution et auxdits câbles hybrides d'amarrage.

3. Boîtier de connecteur selon la revendication 1 ou 2, ledit boîtier extérieur (37) comportant des protecteurs (45) de rayon de courbure positionnés dans l'intérieur (39) dudit boîtier extérieur (37), lesdits protecteurs (45) de rayon de courbure étant conçus pour guider lesdites fibres optiques desdits câbles hybrides de distribution et lesdits câbles hybrides d'amarrage dans l'intérieur (39) dudit boîtier extérieur (37).

4. Boîtier de connecteur selon l'une des revendications 1 à 3, lesdites trois parois latérales étant disposées de telle façon que la première paroi latérale (50) du boîtier intérieur se trouve à une plus courte distance de ladite paroi latérale (41) du boîtier extérieur que la deuxième paroi latérale (51) et la troisième paroi latérale (52) du boîtier intérieur.

5. Boîtier de connecteur selon l'une des revendications 1 à 4, lesdites trois parois latérales étant disposées de telle façon que la deuxième paroi latérale (51) positionnée d'un premier côté et la troisième paroi latérale (52) positionnée d'un deuxième côté de ladite première paroi latérale (50) définissent chacune un angle obtus avec ladite première paroi latérale (50).

6. Boîtier de connecteur selon l'une des revendications 1 à 5, ledit boîtier intérieur (38) comportant une paroi supérieure (64), et la paroi inférieure (40) dudit boîtier extérieur (37) faisant fonction de paroi inférieure dudit boîtier intérieur (38) lorsque le boîtier intérieur (38) est monté dans l'intérieur (39) dudit boîtier extérieur (37).
